(19) Europäisches Patentamt
European Patent Office
Office européen des brevets

(11) **EP 2 930 254 B1**

(12) **EUROPEAN PATENT SPECIFICATION**

(45) Date of publication and mention
of the grant of the patent:
**22.02.2017 Bulletin 2017/08**

(21) Application number: **13860037.4**

(22) Date of filing: **04.12.2013**

(51) Int Cl.:
*C22C 38/00* (2006.01)　　*C22C 38/58* (2006.01)
*C22C 38/02* (2006.01)　　*C22C 38/04* (2006.01)
*C22C 38/40* (2006.01)　　*C22C 38/42* (2006.01)
*C22C 38/44* (2006.01)　　*C22C 38/54* (2006.01)
*B23K 35/30* (2006.01)　　*B23K 35/00* (2006.01)
*B32B 15/01* (2006.01)

(86) International application number:
**PCT/JP2013/007134**

(87) International publication number:
**WO 2014/087651 (12.06.2014 Gazette 2014/24)**

(54) **STAINLESS STEEL-CLAD STEEL PLATE HAVING EXCEPTIONAL CORROSION RESISTANCE TO SEAWATER**

EDELSTAHLKASCHIERTE STAHLPLATTE MIT AUSSERGEWÖHNLICHER KORROSIONSBESTÄNDIGKEIT GEGEN MEERWASSER

PLAQUE D'ACIER PLAQUÉ INOXYDABLE DOTÉE D'UNE EXCELLENTE RÉSISTANCE À LA CORROSION DANS L'EAU DE MER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2012 JP 2012265883**

(43) Date of publication of application:
**14.10.2015 Bulletin 2015/42**

(73) Proprietor: **JFE Steel Corporation Tokyo 100-0011 (JP)**

(72) Inventors:
• **KISHI, Keiichiro**
**Tokyo 100-0011 (JP)**
• **YAZAWA, Yoshihiro**
**Tokyo 100-0011 (JP)**
• **TACHIBANA, Shunichi**
**Tokyo 100-0011 (JP)**
• **KURONUMA, Yota**
**Tokyo 100-0011 (JP)**
• **SUEYOSHI, Hitoshi**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**EP-A2- 2 765 214**　　**JP-A- H02 254 121**
**JP-A- H02 254 121**　　**JP-A- S62 297 443**
**JP-A- S62 297 443**　　**JP-A- 2000 290 754**
**JP-A- 2001 262 284**　　**JP-A- 2005 133 125**
**JP-A- 2005 133 125**　　**JP-A- 2013 241 673**

## Description

Technical Field

The present invention relates to stainless cladding steel plates with excellent sea water corrosion resistance that are used in various applications such as harbor structures, shipbuilding and seawater desalination units.

Background Art

In recent years, the characteristics needed for industrial facilities and structures are oriented to durability, long life and maintenance-free performance. Stainless steel is an attractive material that meets such needs. On the other hand, alloying elements such as nickel, molybdenum and chromium that are the main raw materials for stainless steel have high and variable prices. Stainless cladding steel is an economically efficient material that combines the excellent corrosion resistance of stainless steel with low and stable prices. Thus, this steel has recently attracted attention as a substitute for solid stainless steel.

The stainless cladding steel is a composite steel that includes two different types of metals joined together, namely, stainless steel as the cladding metal and ordinary steel as the base metal. Because the cladding steel is a metallurgical combination of dissimilar metals, the material is free from exfoliation in contrast to platings and attains new characteristics which are impossible to achieve with single metals or alloys. Thus, the stainless cladding steel allows for the reduction of stainless steel consumption and can ensure the same level of corrosion resistance as the solid metal (having the metal composition of the cladding metal throughout the thickness), achieving advantages in terms of economic efficiency and functionality.

With these advantages, the stainless cladding steel is considered as highly beneficial functional steel and has recently been increasingly demanded in various industrial fields. In particular, the stainless cladding steel finds use in seawater environments such as harbor structures, shipbuilding, floating production storage and offloading (hereinafter "FPSO") systems and seawater desalination units. The use in such severely corrosive seawater environments requires sea water corrosion resistance.

By the action of chloride ions, passivation films on stainless steel become prone to corrosion in the form of pitting corrosion or crevice corrosion. While the form of corrosion that is observed in acids such as sulfuric acid and hydrofluoric acid is general corrosion, local corrosion occurs in seawater. Accordingly, it is very important to consider pitting corrosion resistance that is the characteristic for preventing the onset of local corrosion.

The pitting corrosion resistance of stainless steel depends on the amounts of chromium, molybdenum and nitrogen in the steel. Generally, the pitting resistance equivalent (PRE) or the pitting index (PI) organizes the amounts as Cr (mass%) + 3Mo (mass%) + 10N (mass%) or Cr (mass%) + 3.3Mo (mass%) + 16N (mass%). It is accepted that the pitting corrosion resistance is higher with increasing PRE value. However, the application of such indexes is limited to solid stainless steel that has undergone heat treatment to dissolve solutes such as precipitates. That is, it is impossible to apply the indexes directly to the pitting corrosion resistance of the cladding metal in stainless cladding steel that is a composite material of stainless steel with carbon steel.

To satisfy the mechanical properties of the base metal and the corrosion resistance of the cladding metal, the stainless cladding steel is conventionally subjected to an off-line heat treatment, namely, normalizing or solution heat treatment.

Patent Literature 1 discloses a technique in which a stainless cladding steel plate with excellent corrosion resistance is manufactured by a solution heat treatment in which a cladding steel plate having a specific cladding metal composition is heated to 1050°C or below and is cooled at 30°C/min or more.

Patent Literature 2 discloses a technique in which a cladding steel having a specific cladding metal composition is heated to 1100 to 1250°C, thereafter hot rolled at a finish rolling temperature of 800°C or above, and cooled at 1°C/sec or more, thereby producing a stainless cladding steel plate with excellent corrosion resistance.

Citation List

Patent Literature

PTL 1: Japanese Unexamined Patent Application Publication No. 9-104953
PTL 2: Japanese Unexamined Patent Application Publication No. 2-254121

JP2000290754 discloses a high corrosion resistance clad steel with excellent in general corrosion resistance in an acidic environment by the acid dew point in a coal combustion type plant and corrosion resistance in an Cl ion environment of high concentration, in which Cl ions are condensed and concentrated into the water of dew condensation and also free from deterioration in corrosion resistance caused by sensitization even in as-rolled state, as a cladding material.

Summary of Invention

Technical Problem

Regarding the technique described in Patent Literature 1, the solution heat treatment requires that the base metal composition be limited in order to ensure the mechanical properties of the base metal. Further, the off-line heat treatment adds production steps.

The technique described in Patent Literature 2 specifies the chemical composition of the cladding metal in the cladding steel plate, the finish rolling temperature and the rate of cooling after the completion of the rolling. However, the technique does not consider the amounts of precipitates such as σ phase which cause a decrease in corrosion resistance. Thus, the literature does not give a sufficient measure for ensuring corrosion resistance.

In light of these circumstances, an object of the invention is to provide a stainless cladding steel plate having excellent sea water corrosion resistance of a cladding metal.

Solution to Problem

To solve the aforementioned problems, the present invention involved studies in which the influence of the steel composition on the pitting corrosion resistance of stainless cladding steel was studied with respect to a plurality of chemical compositions (steel compositions) and a plurality of rolling and heat treatment histories. The present invention has been completed based on the studies.

A summary of the invention is as follows.

[1] A stainless cladding steel plate with excellent sea water corrosion resistance, the stainless cladding steel plate including a cladding metal including, in mass%, C: not more than 0.030%, Si: 0.02 to 1.50%, Mn: 0.02 to 2.0%, P: not more than 0.040%, S: not more than 0.030%, Ni: 22.0 to 25.0%, Cr: 22.0 to 26.0%, Mo: 3.5 to 5.0% and N: 0.10 to 0.25%, the balance being Fe and inevitable impurities, the cladding metal satisfying the relation (1) below, the cladding metal being such that the amounts of chromium and molybdenum present as precipitates in the steel are not more than 0.3 mass% and not more than 0.2 mass%, respectively,

$$Cr + 3.3Mo + 16N \geq 40 \qquad (1)$$

wherein the chemical symbols indicate the amounts in mass% of the respective elements.

[2] The stainless cladding steel plate with excellent sea water corrosion resistance described in [1], wherein the cladding metal further includes, in mass%, B: 0.0010 to 0.0055%.

[3] The stainless cladding steel plate with excellent sea water corrosion resistance described in [1] or [2], wherein the cladding metal further includes, in mass%, Cu: not more than 0.20%.

Advantageous Effects of Invention

The seawater-resistant stainless cladding steels according to the present invention exhibit good sea water corrosion resistance of the cladding metal and good mechanical properties of the base metal. Thus, the present invention may be suitably used in applications where sea water corrosion resistance is required, typically in harbor structures, shipbuilding such as FPSO systems, and seawater desalination units.

Description of Embodiments

The configurations of the invention will be described hereinbelow. In order for the stainless cladding steel plates of the invention to satisfy sea water corrosion resistance, parameters such as the chemical composition and the amounts of precipitates are to be specified.

1. Chemical composition of cladding metal

First, there will be described the reasons why the chemical composition of stainless steel as the cladding metal is limited. All percentages are on mass basis.

C: not more than 0.030%

The C content is preferably as low as possible from the viewpoint of corrosion resistance, in particular, the corrosion resistance of weld heat-affected zones. It is therefore necessary that the C content be controlled to 0.030% or below, and preferably 0.020% or below.

Si: 0.02 to 1.50%

Silicon is necessary for deoxidation. To obtain an appropriate effect, the Si content needs to be 0.02% or more. However, any Si content exceeding 1.50% causes a marked decrease in hot workability. Thus, the Si content is limited to the range of 0.02 to 1.50%, and is preferably in the range of 0.02 to 0.60%.

Mn: 0.02 to 2.0%

Manganese is necessary for deoxidation. To obtain an appropriate effect, the Mn content needs to be 0.02% or more. However, any Mn content exceeding 2.0% results in a decrease in corrosion resistance. Thus, the Mn content is limited to the range of 0.02 to 2.0%, and is preferably in the range of 0.20 to 0.60%.

P: not more than 0.040% and S: not more than 0.030%

From the viewpoint of hot workability, the contents of phosphorus and sulfur are preferably as low as possible. A decrease in hot workability is caused if the P content exceeds 0.040% or the S content exceeds 0.030%. Thus, the P content and the S content are limited to not more than 0.040% and not more than 0.030%, respectively.

Ni: 22.0 to 25.0%

It is necessary that the Ni content be not less than 22.0% from the viewpoint of the stability of austenite phase and in light of the balance of nickel mainly with chromium and molybdenum. On the other hand, the Ni content is not more than 25.0% in consideration of economic efficiency and an increase in hot deformation resistance due to a high Ni content. Thus, the Ni content is limited to the range of 22.0 to 25.0%. To satisfy both the austenite phase stability and the economic efficiency, the Ni content is preferably in the range of 22.0 to 24.5%, and more preferably in the range of 22.5 to 24.5%.

Cr: 22.0 to 26.0%

Chromium is effective for enhancing pitting corrosion resistance and crevice corrosion resistance, and 22.0% or more chromium is required. If, on the other hand, the Cr content exceeds 26.0%, the precipitation of $\sigma$ phase is significantly promoted during the production of the cladding metal and during the clad rolling and cooling, thus resulting in decreases in corrosion resistance and hot workability. Thus, the Cr content is limited to the range of 22.0 to 26.0%. To enhance pitting corrosion resistance and crevice corrosion resistance and to suppress the precipitation of $\sigma$ phase, the Cr content is preferably in the range of 23.0 to 26.0%, and more preferably in the range of 24.0 to 25.5%.

Mo: 3.5 to 5.0%

Molybdenum is effective for enhancing pitting corrosion resistance and crevice corrosion resistance, and 3.5% or more molybdenum is required. If, on the other hand, the Mo content exceeds 5.0%, the precipitation of $\sigma$ phase is significantly promoted during the production of the cladding metal and during the clad rolling and cooling, thus resulting in decreases in corrosion resistance and hot workability. Thus, the Mo content is limited to the range of 3.5 to 5.0%. To enhance pitting corrosion resistance and crevice corrosion resistance and to suppress the precipitation of $\sigma$ phase, the Mo content is preferably in the range of 4.0 to 5.0%, and more preferably in the range of 4.2 to 4.8%.

N: 0.10 to 0.25%

Nitrogen is effective for increasing corrosion resistance. To obtain an appropriate effect, 0.10% or more nitrogen is required. On the other hand, any N content exceeding 0.25% causes a decrease in hot workability. Thus, the N content is limited to the range of 0.10 to 0.25%. The N content is preferably in the range of 0.15 to 0.25%, and more preferably in the range of 0.17 to 0.23%.

The aforementioned components constitute the basic chemical composition of the cladding metal in the cladding steel of the invention. The balance is iron and inevitable impurities. In addition to the aforementioned components, the chemical composition may further include boron and copper in the limited amounts described below.

B: 0.0010 to 0.0055%

Boron is effective for enhancing corrosion resistance and hot workability, and 0.0010% or more boron may be added. On the other hand, more than 0.0055% boron causes decreases in corrosion resistance and hot workability. Thus, the B content is limited to the range of 0.0010 to 0.0055%, and is preferably in the range of 0.0015 to 0.0035%.

Cu: not more than 0.20%

From the viewpoint of corrosion resistance, the Cu content is preferably as low as possible and it may be necessary to limit the Cu content to 0.20% or below. The Cu content is preferably not more than 0.10%, and more preferably not more than 0.05%.

As known in the art, it is necessary that solid stainless steel used in marine applications contain chromium, molybdenum and nitrogen in such amounts that Cr (mass%) + 3.3Mo (mass%) + 16N (mass%) (written as the PI value) is 40 or more. In the cladding steel plates of the invention, a decrease in corrosion resistance is caused if the PI value is less than 40. The PI value is more preferably in the range of 40 to 60.

The upper limit of the PI value is 60 because any PI values larger than 60 no longer enhance the sea water corrosion resistance or the life of structures and facilities and only increase costs.

The base metal in the stainless cladding steel of the invention may be carbon steel or low-alloy steel.

The stainless cladding steel plate of the invention is such that one or both surfaces of the base metal are clad with the cladding metal which includes stainless steel having the aforementioned chemical composition.

2. Precipitates in stainless steel as cladding metal

Next, precipitates in the stainless steel as the cladding metal will be described.

The amount of chromium present as precipitates in the steel is not more than 0.3 mass%, and the amount of molybdenum present as precipitates in the steel is not more than 0.2 mass%. It is known that intermetallics are formed as the $\sigma$ phase depending on the conditions for the manufacturing of austenitic stainless steel to cause a decrease in corrosion resistance. The decrease in corrosion resistance is ascribed to the decrease in the amounts of chromium and molybdenum around the $\sigma$ phase by the formation of intermetallics as the $\sigma$ phase.

In the invention, the formation of the $\sigma$ phase may be suppressed even in the manufacturing of cladding steel, by optimizing the chemical composition. An indicator of this suppression is that the amount of chromium present as precipitates in the steel is not more than 0.3 mass% and the amount of molybdenum present as precipitates in the steel is not more than 0.2 mass%. A decrease in corrosion resistance is caused if the amount of chromium precipitates exceeds 0.3 mass% or if the amount of molybdenum precipitates exceeds 0.2 mass%.

The quantities of the precipitates may be determined by analyzing chromium and molybdenum extracts obtained by electrolytic extraction. An example of the analysis methods is described below. Constant-current electrolysis is performed using 10 vol% acetylacetone-1 mass% tetramethylammonium chloride-methanol as the electrolytic solution. The extraction residue is filtered off with use of an organic filter. The extract is then subjected to thermolysis in a mixed acid, and the quantities of chromium and molybdenum are determined by inductively-coupled plasma (ICP) emission spectrography.

The stainless cladding steel plate of the invention may be preferably manufactured by the following method.

Slabs for clad steel rolling are assembled using austenitic stainless steel having the aforementioned chemical composition as the cladding metal and carbon steel as the base metal. Examples of the slab assembling methods include sandwich methods, open methods and sacrificial methods. Next, for example, the slab assembly is subjected to a thermomechanical control process in which the assembly is heated, rolled and thereafter acceleratedly cooled, or is subjected to a process in which the assembly is rolled and thereafter treated by a solution heat treatment. To ensure the characteristics of the base metal, the thermo-mechanical control process is preferable. In an example of the thermo-mechanical control process, the target steel plate may be produced by heating the slab assembly to 1150 to 1250°C, hot rolling the slab assembly at a finishing temperature of 980 to 1100°C, and cooling the steel plate at a cooling start temperature of 950 to 1070°C, a cooling end temperature of 500 to 600°C and a cooling rate of 5.0°C/sec or more. From the viewpoint of the suppression of $\sigma$ phase precipitation, high-temperature heating, high-temperature finish rolling and high-speed cooling are preferable. In an example of the process involving a solution heat treatment after the rolling, the target steel plate may be produced by heating the slab assembly at 1150 to 1250°C, hot rolling and air cooling the steel sheet, and subjecting the steel sheet to a solution heat treatment in which the steel sheet is heated to 1100°C to 1200°C and cooled at 1.0°C/sec or more.

In the present invention, the production by a thermomechanical control process that is a preferred manufacturing process is described in Examples.

EXAMPLE 1

Hereinbelow, Examples of the invention will be described.

Use was made of austenitic stainless steels having chemical compositions shown in Table 1, and SS400 steel (hereinafter, sometimes written as "ordinary steel"). SS400 steel plates with a plate thickness of 115 mm as the base metal were combined with austenitic stainless steel plates with a plate thickness of 10 mm as the cladding metal, thereby fabricating slab assemblies having a thickness of (115 + 10 + 10 + 115) mm.

Next, the slab assemblies were heated at 1240°C, hot rolled at a finishing temperature of 1000°C, and thereafter acceleratedly cooled at a cooling start temperature of 970°C, a cooling end temperature of 600°C and a cooling rate of 10.0°C/sec. Thus, stainless cladding steels having a base metal thickness of 23 mm and a cladding metal thickness of 2 mm were manufactured.

The stainless cladding steels obtained above were tested in accordance with JIS G0578 (Method of ferric chloride tests for stainless steels) in the following manner to evaluate the pitting corrosion resistance of the cladding metal based on the critical pitting temperature (CPT).

An immersion test was performed in which the steel plate was immersed in a 6% $FeCl_3$ + 1/20 N HCl solution for 24 hours while elevating the temperature at intervals of 5°C. The immersion test was repeated three times. The steel plates failed the test when the greatest depth of the corrosion pits that had occurred reached 0.025 mm. The steel plates passed the test when no pitting corrosion was generated in all the three times of testing. The highest temperature which caused the steel plates to fail the test was obtained as the CPT (°C). The pitting corrosion resistance was evaluated as good when the CPT was 60°C or above and was evaluated as very good when the CPT was 65°C or above. To evaluate the amount of the precipitation of $\sigma$ phase, chromium and molybdenum extracts obtained by electrolytic extraction were analyzed. The electrolytic solution was a 10 vol% acetylacetone-1 mass% tetramethylammonium chloride-methanol mixture liquid. Constant-current electrolysis was performed. The extraction residue was filtered off with use of a 0.2 $\mu$m mesh organic filter. The extract was subjected to thermolysis in a mixed acid, and chromium and molybdenum were quantitatively determined by ICP emission spectrography.

[Table 1]

| No. | C | Si | Mn | P | S | Cu | Ni | Cr | Mo | B | N | PI* | Mass% Cr precipitates | Mo precipitates | CPT (°C) | Remarks |
|---|---|---|---|---|---|---|---|---|---|---|---|---|---|---|---|---|
| 1 | 0.015 | 0.27 | 0.50 | 0.023 | 0.008 | 0.01 | 23.0 | 24.7 | 4.5 | 0.0022 | 0.21 | 42.9 | 0.017 | 0.006 | 70 | Inv. Ex. |
| 2 | 0.020 | 0.35 | 1.30 | 0.030 | 0.005 | 0.03 | 23.1 | 25.2 | 4.8 | 0.0015 | 0.20 | 44.2 | 0.020 | 0.011 | 65 | Inv. Ex. |
| 3 | 0.010 | 0.45 | 1.18 | 0.009 | 0.001 | 0.19 | 23.2 | 25.1 | 3.6 | 0.0031 | 0.20 | 40.2 | 0.019 | 0.007 | 60 | Inv. Ex. |
| 4 | 0.009 | 0.37 | 1.22 | 0.018 | 0.003 | 0.08 | 22.9 | 25.3 | 5.0 | 0.0024 | 0.18 | 44.7 | 0.101 | 0.030 | 60 | Inv. Ex. |
| 5 | 0.016 | 0.28 | 1.01 | 0.021 | 0.009 | 0.16 | 23.4 | 22.4 | 4_3 | 0.0020 | 0.24 | 40.4 | 0.011 | 0.010 | 60 | Inv. Ex. |
| 6 | 0.021 | 0.31 | 0.78 | 0.031 | 0.011 | 0.05 | 23.4 | 25.7 | 4.2 | 0.0021 | 0.21 | 42.9 | 0.031 | 0.008 | 65 | Inv. Ex. |
| 7 | 0.019 | 0.38 | 0.95 | 0.015 | 0.008 | 0.04 | 23.1 | 24.2 | 4.6 | 0.0019 | 0.19 | 42.5 | 0.016 | 0.009 | 65 | Inv. Ex. |
| 8 | 0.022 | 0.51 | 1.03 | 0.034 | 0.007 | 0.12 | 23.9 | 25.5 | 4.7 | 0.0033 | 0.10 | 42.6 | 0.103 | 0.110 | 60 | Inv. Ex. |
| 9 | 0.011 | 0.36 | 0.98 | 0.024 | 0.018 | 0.03 | 24.2 | 23.1 | 4.2 | 0.0045 | 0.25 | 41.0 | 0.018 | 0.007 | 60 | Inv. Ex. |
| 10 | 0.012 | 0.35 | 0.99 | 0.023 | 0.017 | 0.05 | 24.3 | 25.8 | 4.2 | - | 0.24 | 43.5 | 0.101 | 0.011 | 60 | Inv. Ex. |
| 11 | 0.019 | 0.33 | 0.78 | 0.022 | 0.017 | 0.07 | 24.5 | 25.9 | 4.4 | 0.0012 | 0.15 | 42.8 | 0.126 | 0.009 | 60 | Inv. Ex. |
| 12 | 0.017 | 0.34 | 1.01 | 0.019 | 0.018 | _0.30_ | 23.1 | 25.1 | 4.5 | 0.0021 | 0.20 | 43.2 | 0.019 | 0.007 | 55 | Comp. Ex. |
| 13 | 0.018 | 0.40 | 0.99 | 0.022 | 0.090 | _1.51_ | 23.4 | 24.7 | 4.6 | 0.0023 | 0.22 | 43.4 | 0.018 | 0.010 | 55 | Comp. Ex. |
| 14 | 0.016 | 0.46 | 1.14 | 0.024 | 0.005 | 0.10 | 23.0 | 24.1 | _5.5_ | 0.0024 | 0.21 | 45.6 | _0.410_ | _0.320_ | 40 | Comp. Ex. |
| 15 | 0.018 | 0.37 | 1.21 | 0.020 | 0.003 | 0.09 | 23.1 | 24.6 | _6.2_ | 0.0041 | 0.19 | 48.2 | _0.510_ | _0.410_ | 35 | Comp. Ex. |
| 16 | 0.020 | 0.29 | 0.87 | 0.027 | 0.007 | 0.12 | 23.3 | 23.7 | _1.5_ | 0.0023 | 0.20 | _31.8_ | 0.120 | 0.070 | 40 | Comp. Ex. |
| 17 | 0.023 | 0.35 | 0.57 | 0.031 | 0.009 | 0.14 | 22.8 | _21.0_ | 3.8 | 0.0021 | 0.20 | _36.7_ | 0.090 | 0.050 | 45 | Comp. Ex. |
| 18 | 0.019 | 0.37 | 0.67 | 0.028 | 0.010 | 0.07 | 23.1 | _21.5_ | 4.1 | 0.0019 | 0.19 | _38.1_ | 0.100 | 0.050 | 45 | Comp. Ex. |
| 19 | 0.015 | 0.24 | 0.89 | 0.024 | 0.007 | 0.08 | 23.0 | _26.5_ | 4.2 | 0.0029 | 0.21 | 43.8 | _0.560_ | _0.390_ | 35 | Comp. Ex. |
| 20 | 0.018 | 0.29 | 1.13 | 0.029 | 0.008 | 0.11 | 22.7 | 23.4 | 4.1 | 0.0019 | _0.09_ | _38.4_ | 0.110 | 0.090 | 40 | Comp. Ex. |
| 21 | 0.024 | 0.31 | 1.34 | 0.032 | 0.009 | 0.09 | 23.1 | 24.7 | 3.9 | 0.0023 | _0.04_ | _38.2_ | 0.150 | 0.110 | 50 | Comp. Ex. |

Notes: The underlined Cu contents are outside the range of Claim 3, and the underlined contents of other components are outside the range of Claim 1. *: PI=Cr+3.3Mo+16N wherein the chemical symbols represent the amounts in mass% of the respective elements.

EP 2 930 254 B1

From Table 1, Nos. 1 to 11 representing Inventive Examples achieved a target CPT value of 60°C or above, indicating that excellent sea water corrosion resistance was obtained. Nos. 12 to 21 are Comparative Examples. In Nos. 12 and 13, the Cu content was excessively high and the CPT value was below the target temperature. In Nos. 14, 15 and 19, the amount of chromium precipitates and the amount of molybdenum precipitates were excessively large and the CPT value was below the target temperature. In Nos. 16, 17, 18, 20 and 21, the PI value was excessively low and the CPT value was below the target temperature.

## Claims

1.  A stainless cladding steel plate with excellent sea water corrosion resistance, the stainless cladding steel plate including a cladding metal consisting of, in mass%, C: not more than 0.030%, Si: 0.02 to 1.50%, Mn: 0.02 to 2.0%, P: not more than 0.040%, S: not more than 0.030%, Ni: 22.0 to 25.0%, Cr: 22.0 to 26.0%, Mo: 3.5 to 5.0% and N: 0.10 to 0.25%, Cu: not more than 0.20% and optionally B: 0.0010 to 0.0055% the balance being Fe and inevitable impurities, the cladding metal satisfying the relation (1) below, wherein the amount of chromium present as precipitates in the steel is not more than 0.3 mass% and the amount of molybdenum present as precipitates in the steel is not more than 0.2 mass%, respectively,

$$Cr + 3.3Mo + 16N \geq 40 \qquad (1)$$

wherein the chemical symbols indicate the amounts in mass% of the respective elements.

## Patentansprüche

1.  Edelstahlplattierte Stahlplatte mit exzellenter Seewasser-Korrosionsbeständigkeit, wobei die edelstahlplattierte Stahlplatte ein Plattiermetall umfasst, das in Massen-% besteht aus: C: nicht mehr als 0,030%, Si: 0,02 bis 1,50%, Mn: 0,02 bis 2,0%, P: nicht mehr als 0,040%, S: nicht mehr als 0,030%, Ni: 22,0 bis 25,0%, Cr: 22,0 bis 26,0%, Mo: 3,5 bis 5,0% und N: 0,10 bis 0,25%, Cu: nicht mehr als 0,20% und wahlweise B: 0,0010 bis 0,0055%, wobei die Restmenge Fe und unvermeidbare Verunreinigungen sind, das Plattiermetall die unten erwähnte Beziehung (1) erfüllt und die Menge von Chrom, die als Niederschlag in dem Stahl vorhanden ist, nicht mehr als 0,3 Massen-% beträgt, bzw. die Menge von Molybdän, die als Niederschlag in dem Stahl vorhanden ist, nicht mehr als 0,2 Massen-% beträgt,

$$Cr + 3,3\,Mo + 16N \geq 40 \qquad (1),$$

wobei die chemischen Symbole die Mengen in Massen-% der jeweiligen Elemente kennzeichnen.

## Revendications

1.  Plaque d'acier à plaquage inoxydable ayant une excellente résistance à la corrosion par l'eau de mer, la plaque d'acier à plaquage inoxydable comprenant un métal de plaquage comprenant, en pourcentage massique, pas plus de 0,030 % de C, de 0,02 à 1,50 % de Si, de 0,02 à 2,0 % de Mn, pas plus de 0,040 % de P, pas plus de 0,030 % de S, de 22,0 à 25,0 % de Ni, de 22 % à 26 % de Cr, de 3,5 à 5,0 % de Mo et de 0,10 à 0,25 % de N, pas plus de 0,20 % de Cu et éventuellement de 0,0010 à 0,0055 % de B, le reste étant constitué de Fe et des impuretés inévitables, le métal de plaquage satisfaisant à la relation (1) ci-dessous, dans laquelle la quantité de chrome présent en tant que précipités dans l'acier n'est pas supérieure à 0,3 % en masse et la quantité de molybdène présent en tant que précipités dans l'acier n'est pas supérieure à 0,2 % en masse, respectivement,

$$Cr + 3,3\,Mo + 16\,N \geq 40 \qquad (1)$$

les symboles chimiques indiquant les quantités en pourcentage massique des éléments respectifs.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9104953 A
- JP 2254121 A

- JP 2000290754 B